# EUROPEAN PATENT APPLICATION

(11) **EP 3 696 434 A1**
(43) Date of publication of application: **19.08.2020**
(21) Application number: 18865994.0
(22) Date of filing: 05.10.2018
(51) Int. Cl.: F16C 37/00, F16C 19/16

(54) **COOLING STRUCTURE FOR BEARING DEVICE**

(30) Priority: 11.10.2017 JP 2017197621
(71) Applicant: NTN Corporation, Osaka-shi, Osaka 550-0003 (JP)
(72) Inventor: UEDA, Keiichi, Kuwana-shi Mie 511-8678 (JP); NASU, Keisuke, Kuwana-shi Mie 511-8678 (JP)
(74) Representative: Patentanwälte Behrmann Wagner PartG mbB
(86) International application number: PCT/JP2018/037307
(87) International publication number: WO 2019/073911

(57) **Abstract**

A bearing device (J) includes: a plurality of rolling bearings (1, 1); an outer ring spacer (4) and an inner ring spacer (5) interposed between the plurality of rolling bearings (1, 1). In a cooling structure for the bearing device (J), the outer ring spacer (4) has an inner peripheral surface provided with an annular recessed part (10), and the recessed part (10) has a bottom surface having an air supply opening (II) for compressed air. The outer ring spacer (4) has outer portions (16) of the inner peripheral surface with a cross-sectional shape having an increasing inner diameter toward axially outside, and each of the outer portions (16) of the inner peripheral surface has an axially outer end formed with an exhaust opening (17). The inner ring spacer (5) is opposed to the outer ring spacer (4) via throttle gaps (18). The outer peripheral surface of the inner ring spacer (5) is increasingly spaced from the outer portions (16) of the inner peripheral surface, from the throttle gaps (18) toward axially outside. The inner ring spacer (5) has axial ends each having an outer diameter larger than an outer diameter of axial ends of the inner rings (3) of the rolling bearings (1).

## Description

### CROSS REFERENCE TO THE RELATED APPLICATION

This application is based on and claims Convention priority to Japanese patent application No. 2017-197621, filed October 11, 2017, the entire disclosure of which is herein incorporated by reference as a part of this application,

### BACKGROUND OF THE INVENTION

### (Field of the Invention)

The present invention relates to a cooling structure for a bearing device and, for example, to a cooling structure for a spindle of a machine tool and for a bearing device incorporated into the spindle.

### (Description of Related Art)

For spindle devices of machine tools, it is necessary to suppress temperature rise in the devices to ensure processing accuracy. Recent machine tools, however, tend to be operated at higher speed in order to improve processing efficiency, resulting in increased heat generation from bearings that support the spindles with increasing speed. Moreover, so-called motor built-in spindle devices having a driving motor incorporated therein are becoming more common, which also leads to heat generation in the devices.

In view of achieving speeding up and higher precision of the spindles, temperature rise in the bearings due to heat generation has to be minimized because it would cause an increase in preload. A method for suppressing temperature rise in a spindle device includes supplying compressed air for cooling to bearings to cool the bearings (for example, Patent Document 1). In Patent Document 1, compressed air is injected at an angle relative to a rotation direction into a space between an outer ring spacer and an inner ring spacer from a nozzle hole defined in the outer ring spacer so as to produce a swirl flow, and the inner ring spacer is effectively cooled thereby. The compressed air having passed through the inner ring spacer then passes through exhaust openings defined at axial ends of the outer ring spacer which are adjacent to the rolling bearings and/or through the bearings to be discharged outside.

Since this method of cooling with compressed air provides high cooling effects, it is expected that temperature rise in spindle devices can be effectively suppressed. Where the method of cooling with compressed air is applied to a grease-lubricated bearing device, however, the compressed air blows out and removes grease inside the bearings. To prevent this, it has been proposed to provide a grease-lubricated bearing device with baffle walls at axial end portions of an inner ring spacer so as to prevent compressed air from flowing into the bearings (Patent Document 2).

### [Related Document]

### [Patent Document]

[Patent Document 1] JP Laid-open Patent Publication No. 2015-183738
[Patent Document 2] JP Laid-open Patent Publication No. 2014-62619

### SUMMARY OF THE INVENTION

In the cooling structure for a bearing device of Patent Document 2, however, the compressed air discharged from a supply opening defined in an outer ring spacer toward the inner ring spacer directly escapes to the outside in an axial direction, through gaps between the outer ring spacer and the inner ring spacer, resulting in the compressed air coming into contact with the inner ring spacer only for a short period of time. Thus, this provides some but not enough cooling effects.

Additionally, since the cooling structure for a bearing device of Patent Document 2 has large spaces defined between the baffle walls of the inner ring spacer and the outer ring spacer, the compressed air having passed through the gaps is retained in the spaces in a turbulent state, making it difficult for the compressed air to be discharged from the exhaust openings. Where the compressed air is retained in these spaces for a long period of time, the compressed air is more likely to flow into the bearing spaces.

An object of the present invention is to provide a cooling structure for a bearing device, which is capable of retaining compressed air for cooling around a surface of an inner ring spacer for a long period of time so as to effectively cool the inner ring spacer as well as of quickly discharging the compressed air after cooling the inner ring spacer so as to minimize an amount of the compressed air that flows into rolling bearings.

A cooling structure for a bearing device according to the present invention includes:
a plurality of rolling bearings arranged in an axial direction;
an outer ring spacer interposed between outer rings of the plurality of rolling bearings;
an inner ring spacer interposed between inner rings of the plurality of rolling bearings;
a housing in which the outer rings and the outer ring spacer are disposed; and
a rotary shaft to which the inner rings and the inner ring spacer are fitted,
wherein each of the rolling bearings has axial end portions provided with sealing members, each of the sealing members having an outer diameter end that is attached to the outer ring and an inner diameter end with a seal lip that is in contact with or in proximity to an outer diameter surface of the inner ring, and each of the rolling bearings is configured to be lubricated by grease filled in an internal space of each rolling bearing, which is defined by the outer ring, the inner ring and the sealing members,
the outer ring spacer has an inner peripheral surface provided with an annular recessed part,
the recessed part has a bottom surface having an air supply opening configured to discharge compressed air toward an outer peripheral surface of the inner ring spacer,
the inner peripheral surface of the outer ring spacer has outer portions of the inner peripheral surface that are opposite side portions of the recessed part in the axial direction, each of the outer portions having a cross-sectional shape having an increasing inner diameter toward axially outside,
each of the outer portions of the inner peripheral surface has an axially outer end formed with an exhaust opening configured to discharge the compressed air to outside,
the inner ring spacer has parts of the outer peripheral surface that are opposed to boundary parts located between the recessed part and the outer portions of the inner peripheral surface on the inner peripheral surface of the outer ring spacer, via throttle gaps configured to restrict flow of the compressed air,
the outer peripheral surface of the inner ring spacer is increasingly spaced from the outer portions of the inner peripheral surface, from the throttle gaps toward axially outside, and
the inner ring spacer has axial ends each having an outer diameter larger than an outer diameter of axial ends of the inner rings of the rolling bearings, which face the inner ring spacer.

According to this configuration, the compressed air for cooling is discharged toward the outer peripheral surface of the inner ring spacer from the air supply opening that is opened on the bottom surface of the recessed part of the outer ring spacer. The compressed air is discharged from the narrow air supply opening into the large recess space defined between the recessed part of the outer ring spacer and the inner ring spacer so that the compressed air is adiabatically expanded. This causes the temperature of the compressed air to decrease and the volume of the compressed air to increase, increasing the flow rate. Such compressed air at low temperature and high speed is blown onto the inner ring spacer so that the inner ring spacer is effectively cooled.

The throttle gaps provided on both sides of the recess space in the axial direction make it difficult for the compressed air to flow out of the recess space, so that the compressed air is temporarily retained within the recess space. This extends a period of time for which the compressed air comes into contact with the inner ring spacer, which allows the inner ring spacer to be cooled more efficiently. In this way, the inner ring spacer is effectively cooled, making it possible to also effectively cool the rolling bearings and the rotary shaft that are in contact with the inner ring spacer.

The compressed air having passed through the throttle gaps flows toward axially outside through passage spaces defined between the outer portions of the inner peripheral surface of the outer ring spacer and the outer peripheral surface of the inner ring spacer. Since each axial end of the inner ring spacer has a larger outer diameter than the outer diameter of the axial ends of the inner rings of the rolling bearings, the inner ring spacer axially covers the seal lips of the sealing members, preventing the compressed air from directly striking the seal lips. Since the passage spaces are formed such that the outer portions of the inner peripheral surface and the outer peripheral surface of the inner ring spacer are increasingly spaced from each other toward axially outside, the pressure decreases as the compressed air flows axially outward. This pressure gradient provides an effect of drawing the compressed air toward the exhaust openings so that the compressed air is smoothly discharged from the exhaust openings. Thereby, it is possible to prevent the compressed air from flowing into the bearing and removing the grease.

In the present invention, each of the outer portions of the inner peripheral surface of the outer ring spacer may have a tapered shape having an inner diameter that increases toward axially outside. Even where the outer portions of the inner peripheral surface are tapered, it is possible to provide the effect of drawing the compressed air toward the exhaust openings. In this case, the outer ring spacer can be easily processed, thanks to the simple shape of the outer portions of the inner peripheral surface.

In the present invention, the outer peripheral surface of the inner ring spacer may have a tapered shape having an outer diameter that is smallest at an air receiving part at which the compressed air discharged from the air supply opening strikes and increases from the air receiving part toward axially outside. Where the outer peripheral surface of the inner ring spacer has such a shape, it is possible to facilitate processing of the inner ring spacer while securing a large space between the recessed part of the outer ring spacer and the inner ring spacer.

Where the outer peripheral surface of the inner ring spacer has such a shape, the inner ring spacer may be divided into two inner-ring-spacer divided bodies at an axial position of the air receiving part. By dividing the inner ring spacer into the two inner-ring-spacer divided bodies, it is possible to easily incorporate the outer ring spacer on an outer periphery side of the inner ring spacer.

Any combination of at least two constructions disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a section view of a bearing device having a cooling structure according to an embodiment of the present invention;
Fig. 2 is a section view along line II-II in Fig. 1;
Fig. 3 illustrates a part of an outer ring spacer of the bearing device in a developed state;
Fig. 4 illustrates an assembly order for the bearing device; and
Fig. 5 is a section view of the bearing device incorporated into a spindle device of a machine tool.

### DESCRIPTION OF THE EMBODIMENTS

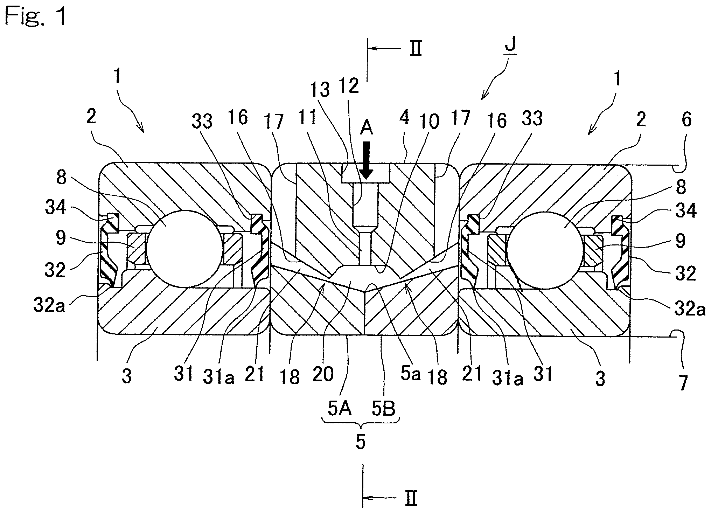

Hereinafter, a cooling structure for a bearing device according to an embodiment of the present invention will be described with reference to Fig. 1 to Fig. 3. As shown in Fig. 1, the bearing device J includes: a plurality of rolling bearings 1, 1 arranged in an axial direction; an outer ring spacer 4 interposed between outer rings 2, 2 of the rolling bearings 1, 1; and an inner ring spacer 5 interposed between inner rings 3, 3. Each of the rolling bearings 1 is in the form of an angular ball bearing. These rolling bearings 1, 1 in the form of angular ball bearings are disposed in a back-to-back arrangement. In each rolling bearing 1, a plurality of rolling elements 8 are interposed between raceway surfaces of the outer ring 2 and the inner ring 3 in such a way that the rolling elements 8 are retained by a cage 9 at equal intervals in a circumferential direction.

In each rolling bearing 1, sealing members 31, 32 are attached to opposite axial ends of the outer ring 2. Each of the sealing members 31, 32 is attached such that an outer diameter end thereof is fitted to a circumferential groove 33, 34 provided to the outer ring 2, and a seal lip 31a, 32a provided at an inner diameter end thereof is in contact with or in proximity to the outer peripheral surface of the inner ring 3. Grease fills an internal space of each bearing, which is defined by the outer ring 2, the inner ring 3, and the sealing members 31, 32 provided on opposite sides.

This bearing device J is used to, for example, support a spindle of a machine tool. The outer ring 2 of each rolling bearing 1 is fixed inside a housing 6 that is a stationary-side member, whereas the inner ring 3 is fitted to an outer peripheral surface of the spindle 7 that is a rotary shaft (a rotary-side member).

A cooling structure for the bearing device J will be described. The outer ring spacer 4 has an inner peripheral surface provided with an annular recessed part 10 at a central part thereof in the axial direction. The recessed part 10 includes a bottom surface formed as a cylindrical surface and side wall surfaces each having an increasing axial width toward an inner diameter side and has a substantially trapezoidal shape with a cross section recessed radially outward. The bottom surface and the side wall surfaces of the recessed part 10 are connected by smooth curved surfaces. The bottom surface of the recessed part 10 has a plurality of air supply openings 11 defined in the circumferential direction. The air supply openings 11 are connected to an annular introduction groove 13 provided on an outer peripheral surface of the outer ring spacer 4 via connection holes 12.

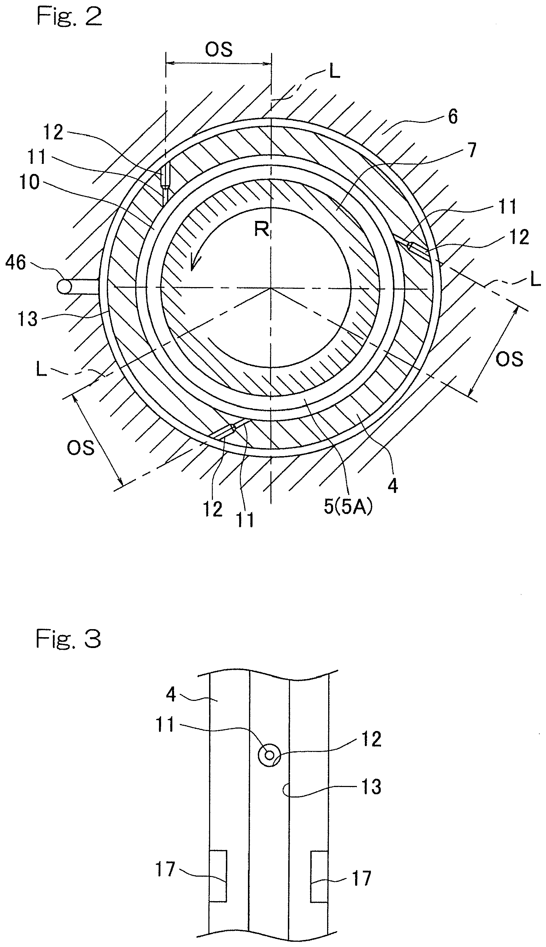

As shown in Fig. 2, in this example, there are three air supply openings 11 at equal intervals in the circumferential direction. Each of the air supply openings 11 is inclined forward with respect to a rotation direction R of the inner ring spacer 5 (spindle 7). That is, each air supply opening 11 is located at a position that is offset from an arbitrary radial line L in a cross section perpendicular to the axis of the outer ring spacer 4, by a distance OS in a direction perpendicular to the line L. It should be noted that in Fig. 1, the outer ring spacer 4 is illustrated in a sectional view along the center line passing through one air supply opening 11.

A compressed-air supply device (not illustrated) is provided outside the bearing device J, and the compressed-air supply device supplies compressed air A to the introduction groove 13 through a compressed-air introduction hole 46 defined in the housing 6.

In Fig. 1, the inner peripheral surface of the outer ring spacer 4 has opposite side portions of the recessed part 10 in the axial direction (outer portions of the inner peripheral surface) that form tapered inner peripheral surface portions 16 each having a tapered shape having an increasing inner diameter towards axially outside. The tapered inner peripheral surface portions 16 are formed with the number of exhaust openings 17 corresponding to that of the air supply openings 11 at the respective axially outer ends thereof. Each of the exhaust openings 17 has, for example, a rectangularly notched shape as shown in the developed view in Fig. 3. The outer rings 2 of the rolling bearings 1 are disposed adjacent to the outer ring spacer 4 such that the exhaust openings 17 are shaped into openings that communicate the inside and outside of the bearing device J.

In Fig. 1, the inner ring spacer 5 has an outer diameter that is smallest at an air receiving part 5a at which the compressed air A discharged from the air supply openings 11 strikes and increases from the air receiving part 5a toward axially outside. In this example, the air receiving part 5a is an axially central part of the inner ring spacer 5. That is, the outer peripheral surface of the inner ring spacer 5 is also tapered. The tapered outer peripheral surface of the inner ring spacer 5 has a smaller inclination angle than an that of the tapered inner peripheral surface portions 16 of the outer ring spacer 4. The inner ring spacer 5 has an outer diameter at its axial ends which is larger than the outer diameter of axial ends of the inner rings 3 of the rolling bearings 1, which face the inner ring spacer 5. The inner ring spacer 5 is divided into two inner-ring-spacer divided bodies 5A, 5B at an axial position of the air receiving part 5a.

The inner ring spacer 5 has parts of the outer peripheral surface that are opposed to boundary parts located between the recessed part 10 and the tapered inner peripheral surface portions 16 on the inner peripheral surface of the outer ring spacer 4, via throttle gaps 18. This separates a recessed-part space 20 defined between the recessed part 10 of the outer ring spacer 4 and the inner ring spacer 5, from passage spaces 21 defined between the tapered inner peripheral surface portions 16 of the outer ring spacer 4 and the inner ring spacer 5, restricting flow of the compressed air A from the recessed-part space 20 to the passage spaces 21.

Effects of the cooling structure for the bearing device which has the above configuration will be described. During, e.g., operation of the bearing device J, the compressed air A for cooling is blown from the air supply openings 11 defined in the outer ring spacer 4 toward the outer peripheral surface of the inner ring spacer 5. The compressed air A is discharged from the narrow air supply openings 11 into the large recessed-part space 20 so that the compressed air A is adiabatically expanded. Thus, in the recessed-part space 20, the temperature of the compressed air A decreases, as its volume increases. Increase in the volume causes the flow rate of the compressed air A to increase. Thus, the compressed air A at low temperature and high speed is blown onto the inner ring spacer 5 so that the inner ring spacer 5 is effectively cooled.

The throttle gaps 18 on both sides of the recessed-part space 20 in the axial direction restrict flow of the compressed air A from the recessed-part space 20 to the passage spaces 21. Also, the air supply openings 11 are inclined forward with respect to the rotation direction of the inner ring spacer 5 so that the compressed air A swirls within the recessed-part space 20 in the circumferential direction, suppressing the flow in the axial direction. This allows the compressed air A to stay in the recessed-part space 20 for a longer period of time, making it possible to even more effectively cool the inner ring spacer 5. In this way, the inner ring spacer 5 is effectively cooled, making it possible to also effectively cool the rolling bearings 1 and the spindle 7 that are in contact with the inner ring spacer 5.

The compressed air A having passed through the throttle gaps 18 flows axially outward through the passage spaces 21 between the tapered inner peripheral surface portions 16 of the outer ring spacer 4 and the outer peripheral surface of the inner ring spacer 5. Since the axial ends of the inner ring spacer 5 have a larger outer diameter than the outer diameter of the axial ends of the inner rings 3 of the rolling bearings 1, the inner ring spacer 5 axially covers the seal lips 31a of the sealing members 31, preventing the compressed air A from directly striking the seal lips 31a. Since the passage spaces 21 are formed such that the tapered inner peripheral surface portions 16 of the outer ring spacer 4 and the outer peripheral surface of the inner ring spacer 5 are increasingly spaced from each other toward axially outside, the pressure decreases as the compressed air A flows axially outward within the passage spaces 21. This pressure gradient provides an effect of drawing the compressed air A toward the exhaust openings 17 so that the compressed air A is smoothly discharged from the exhaust openings 17. Thereby, it is possible to prevent the compressed air A from flowing into the bearing and removing the grease.

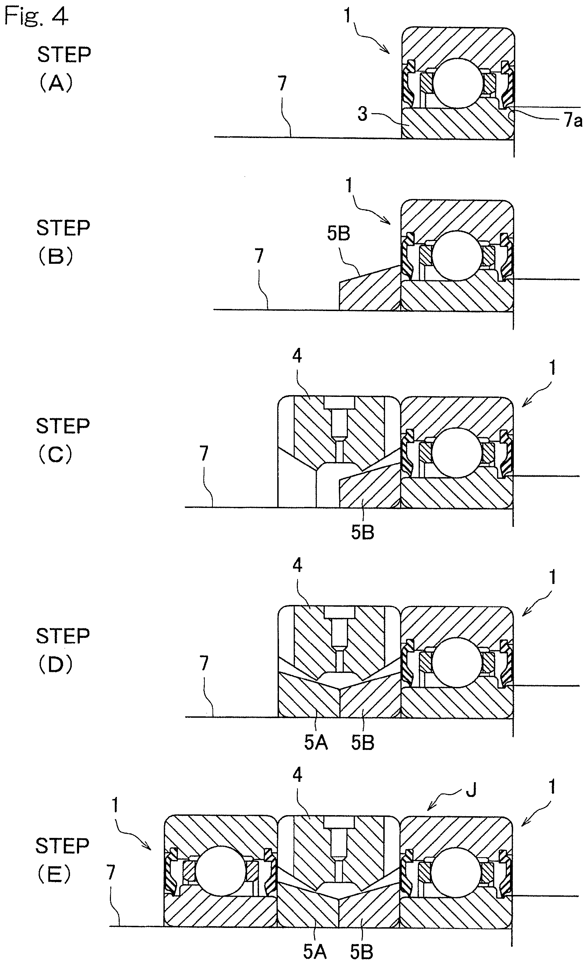

Next, assembly processes for the bearing device J will be described with reference to Fig. 4. First, in step (A), one rolling bearing 1 (for example, on the right-hand side) is assembled onto a spindle 7. When doing so, the inner ring 3 is brought into abutment with a stepped part 7a of the spindle 7 or with a positioning spacer fitted to an outer periphery of the spindle 7 in order to position the bearing in the axial direction. Then, in steps (B) to (E), one inner-ring-spacer divided body 5B (on the right-hand side), an outer ring spacer 4, the other inner-ring-spacer divided body 5A (on the left-hand side), and then the other rolling bearing 1 (on the left-hand side) are sequentially assembled to form a bearing device J.

Since the inner ring spacer 5 is divided into the two inner-ring-spacer divided bodies 5A, 5B, the outer ring spacer 4 can be easily assembled on the outer periphery side of the inner ring spacer 5 as described above. The outer ring spacer 4 and the inner-ring-spacer divided bodies 5A, 5B are excellent in productivity because they can be easily processed thanks to their relatively simple shapes.

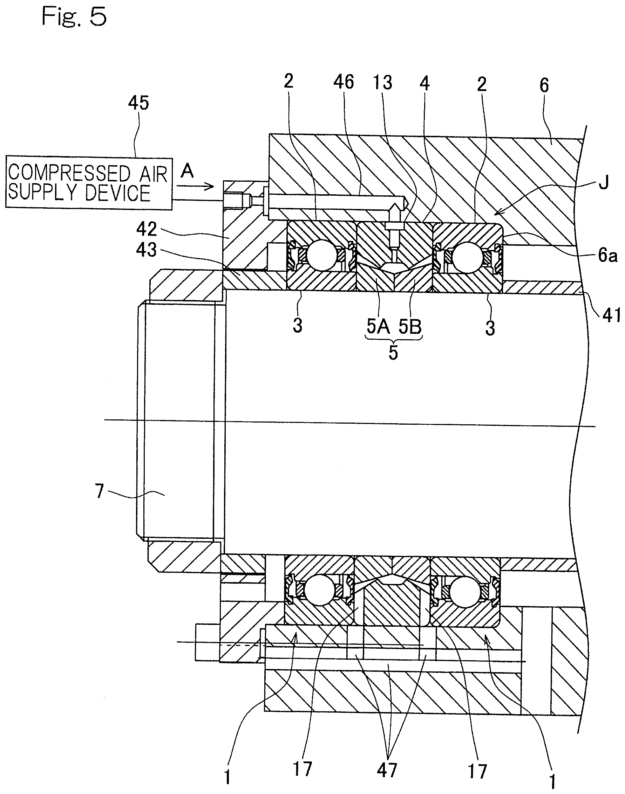

Fig. 5 is a section view illustrating a part of a spindle device of a machine tool in which the bearing device J is incorporated. In the bearing device J, the outer rings 2, 2 of the rolling bearings 1, 1 and the outer ring spacer 4 are fitted to an inner peripheral surface of the housing 6, and the inner rings 3, 3 of the rolling bearings 1, 1 and the inner ring spacer 5 are fitted to the outer peripheral surface of the spindle 7 of the machine tool. For example, the outer rings 2 and the outer ring spacer 4 are fitted to the housing 6 by clearance fit, and the inner rings 3 and the inner ring spacer 5 are fitted to the spindle 7 by interference fit. The outer ring 2 of the one rolling bearing 1 (on the right-hand side in the drawing) is axially positioned by a stepped part 6a of the housing 6, and the inner ring 3 of the same rolling bearing 1 is axially positioned by a positioning spacer 41. An outer-ring retainer 42 and an inner-ring retainer 43 are pressed against the outer ring 2 and the inner ring 3 of the other rolling bearing 1 (on the left-hand side in the drawing), respectively, in order to fix the bearing device J to the housing 6.

The housing 6 and the outer-ring retainer 42 are provided with a compressed-air introduction hole 46 for introducing the compressed air A for cooling supplied from the compressed-air supply device 45 into the bearing device J. The compressed-air introduction hole 46 is communicated with the introduction groove 13 provided on the outer peripheral surface of the outer ring spacer 4. Also, the housing 6 and the outer-ring retainer 42 are provided with exhaust holes 47 which are communicated with the exhaust openings 17 of the outer ring spacer 5.

Since the cooling structure for the bearing device J provides high cooling effects for the rolling bearings 1 and the spindle 7 as described above, it is possible to operate the spindle device J in a high speed range. Therefore, the bearing device J can be suitably used for supporting the spindle 7 of the machine tool.

Although the embodiments of the present invention have been described with reference to the examples, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims or equivalent thereto.

### [Reference Numerals]

- 1 ····: Rolling bearing
- 2 ····: Outer ring
- 3 ····: Inner ring
- 4 ····: Outer ring spacer
- 5 ····: Inner ring spacer
- 5A, 5B ····: Inner-ring-spacer divided body
- 5a ····: Air receiving part
- 6 ····: Housing
- 7 ····: Spindle (Rotary shaft)
- 10 ····: Recessed part
- 11 ····: Air supply opening
- 16 ····: Tapered inner peripheral surface portion
- 17 ····: Exhaust opening
- 18 ····: Throttle gap
- J ····: Bearing device

## Claims

1. A cooling structure for a bearing device comprising:
a plurality of rolling bearings arranged in an axial direction;
an outer ring spacer interposed between outer rings of the plurality of rolling bearings;
an inner ring spacer interposed between inner rings of the plurality of rolling bearings;
a housing in which the outer rings and the outer ring spacer are disposed; and
a rotary shaft to which the inner rings and the inner ring spacer are fitted,
wherein each of the rolling bearings has axial end portions provided with sealing members, each of the sealing members having an outer diameter end that is attached to the outer ring and an inner diameter end with a seal lip that is in contact with or in proximity to an outer diameter surface of the inner ring, and each of the rolling bearings is configured to be lubricated by grease filled in an internal space of the rolling bearing, which is defined by the outer ring, the inner ring and the sealing members,
the outer ring spacer has an inner peripheral surface provided with an annular recessed part,
the recessed part has a bottom surface having an air supply opening configured to discharge compressed air toward an outer peripheral surface of the inner ring spacer,
the inner peripheral surface of the outer ring spacer has outer portions of the inner peripheral surface that are opposite side portions of the recessed part in the axial direction, each of the outer portions having a cross-sectional shape having an increasing inner diameter toward axially outside,
each of the outer portions of the inner peripheral surface has an axially outer end formed with an exhaust opening configured to discharge the compressed air to outside,
the inner ring spacer has parts of the outer peripheral surface that are opposed to boundary parts located between the recessed part and the outer portions of the inner peripheral surface on the inner peripheral surface of the outer ring spacer, via throttle gaps configured to restrict flow of the compressed air,
the outer peripheral surface of the inner ring spacer is increasingly spaced from the outer portions of the inner peripheral surface, from the throttle gaps toward axially outside, and
the inner ring spacer has axial ends each having an outer diameter larger than an outer diameter of axial ends of the inner rings of the rolling bearings, which face the inner ring spacer.

2. The cooling structure for the bearing device as claimed in claim 1, wherein each of the outer portions of the inner peripheral surface of the outer ring spacer has a tapered shape having an inner diameter that increases toward axially outside.

3. The cooling structure for the bearing device as claimed in claim 1 or 2, wherein the outer peripheral surface of the inner ring spacer has a tapered shape having an outer diameter that is smallest at an air receiving part at which the compressed air discharged from the air supply opening strikes and increases from the air receiving part toward axially outside.

4. The cooling structure for the bearing device as claimed in claim 3, wherein the inner ring spacer is divided into two inner-ring-spacer divided bodies at an axial position of the air receiving part.
